# EUROPÄISCHE PATENTSCHRIFT

(11) **EP 1 245 514 B1**
(45) Veröffentlichungstag und Bekanntmachung des Hinweises auf die Patenterteilung: **18.05.2005**
(21) Anmeldenummer: 02007521.4
(22) Anmeldetag: 02.04.2002
(51) Int. Cl.: B65G 60/00, B65G 1/04, B65G 1/137, B65G 47/51

(54) **Vorrats- und Ausgabeeinrichtung für Transportelemente**
Storage and dispensing device for transport elements
Dispositif de stockage et de distribution pour des éléments de transport

(30) Priorität: 30.03.2001 DE 20105707 U
(43) Veröffentlichungstag der Anmeldung: 02.10.2002
(73) Patentinhaber: GEBHARDT Transport- und Lagersysteme GmbH, 93413 Cham (DE)
(72) Erfinder: Janker, Rupert, 94372 Rattiszell (DE)
(74) Vertreter: Schieschke, Klaus, Dipl.-Ing.

(56) Entgegenhaltungen:
- EP-A- 0 997 409
- DE-A- 19 534 953
- DE-U- 20 005 219
- DE-U- 29 810 336
- FR-A- 1 385 484

## Beschreibung

Die Erfindung bezieht sich auf eine Einrichtung zur Aufgabe, Speicherung und Ausgabe von Transportelementen, insbesondere Paletten.

Transportelemente wie z.B. Paletten, insbesondere Euro-Paletten, werden in weiten Bereichen des Gütertransports eingesetzt. Oft werden zu transportierende Waren auf Paletten gestellt oder auch befestigt, um dann in Containern, auf LKWs oder in Güterzügen transportiert zu werden. Auch wenn solche Transportelemente nur Hilfsmittel zum Transport von Waren sind, stellen sie doch einen gewissen Wert dar. So sind üblicherweise die versendenden und empfangenden Firmen bzw. auch die Transportunternehmen wie Speditionen und die Deutsche Bahn daran interessiert, die Paletten, die mit der zu transportierenden Ware übergeben werden, zurückzuerhalten bzw. einen entsprechenden Wert vergütet zu bekommen.

In der Praxis zeigt sich dabei häufig das Problem, dass die Transportelemente, die im Weiteren unter dem Begriff Paletten geführt werden, unterschiedlicher Abnutzung unterliegen und somit einen unterschiedlichen Wert besitzen. Da außerdem beispielsweise einem Spediteur nicht immer die gleichen Paletten unmittelbar wieder mit zurückgegeben werden können, auf denen die Waren geliefert wurden, müssen stattdessen andere Paletten ausgegeben werden. Diese Paletten können beispielsweise aus einem größeren Vorrat einer permanent belieferten Firma stammen, so dass der Spediteur beispielsweise mit seinem LKW solche Paletten als Ersatz für die mit der Ware gelieferten anderen Paletten wieder zurücknehmen kann.

Für die Organisation dieser Palettenverteilung muss ein personeller Aufwand betrieben werden, den es zu minimieren gilt. Darüber hinaus müssen die Paletten so geordnet und abgreifbar sein, dass sie ohne besonderen manuellen Aufwand und unter minimaler Nutzung beispielsweise von Gabelstaplern sowie in möglichst kurzer Zeit verfügbar sind.

Da die Paletten, die eine belieferte Firma vorrätig hält, oft an einem anderen Ort gelagert werden als an der Stelle, an der die zugelieferte Ware abgeladen wird, steht die damit verbundene räumliche Distanz einer zügigen und einfachen Abwicklung der Palettenverteilung im Weg. Da zwischen neuwertigen und älteren Paletten eine mitunter nicht unerhebliche Differenz des Werts besteht, kann es auch von Bedeutung sein, für mehrere zugelieferte Paletten in schlechtem Zustand eine geringere Anzahl an Paletten in gutem Zustand herauszugeben. Die Bewertung und Verarbeitung solcher Informationen und auch die Bilanzführung über möglicherweise zu viel oder zu wenig ausgelieferte Paletten bei vorherigen Lieferungen erfordert unnötigen personellen und zeitlichen Aufwand.

Auch der Nachteil der räumlichen Trennung zwischen Palettenausgabestelle und Abladestation der empfangenen Ware erfordert nach bisheriger Praxis die Kommunikation zwischen beiden Stellen und bedingt ebenfalls Personalkosten.

Aus der DE 298 10 336 U1 ist eine Abstapelvorrichtung gemäß dem Oberbegriff des Anspruchs 1 bekannt, die eine Speicherstelle für einen Sekundärstapel aufweist, der mittels einer Greifvorrichtung von einem Zufuhrstapel abhebbar und bis zur Zufuhr des nächsten Stapels in der Abstapelvorrichtung verwahrbar ist.

Es ist daher Aufgabe der Erfindung, eine Einrichtung zu schaffen, mit der Transportelemente, insbesondere Paletten, auf einfache Weise registriert, vorrätig gehalten und ausgegeben werden können.

Die Aufgabe wird gelöst durch eine Vorrats- und Ausgabeeinrichtung nach Anspruch 1.

Die Erfindung beruht auf der Erkenntnis, dass es vorteilhaft ist, Paletten in einer Speicher- und Fördereinrichtung so zu speichern, dass sie nach Bedarf und in einer vorbestimmten Anzahl aus dem Speicherbereich ausgegeben werden können. Insbesondere ist es vorteilhaft, wenn die Speicher- und Fördereinrichtung einen Aufgabebereich aufweist, an dem die Paletten dem Speicherbereich zugeführt werden, und einen Ausgabebereich, in welchem die Paletten ausgegeben werden. Die Paletten werden bei zwi-schen dem Aufgabe- und dem Ausgabebereich in Stapeln bewegt, was durch manuellen Antrieb, durch Gravitationskraft oder beispielsweise einen oder mehrere elektrische Antriebe geschehen kann. Der zwischen dem Aufgabe- und dem Ausgabebereich angeordnete Speicherbereich ist so gestaltet, dass er mehrere Stapel von Paletten aufnehmen kann. Die Stapel werden dabei hintereinander angeordnet und so nacheinander dem Ausgabebereich zugeführt. Ein weiterer Vorteil ergibt sich, wenn mehrere Speicher- und Fördereinrichtungen, vorzugsweise nebeneinander, angeordnet sind. Dann können auf parallel angeordneten Bahnen jeweils mehrere Stapel von Paletten gespeichert und gefördert werden.

Bei mehreren solcher Speicher- und Fördereinrichtungen ergibt sich darüber hinaus der Vorteil, dass die Ausgabe der einzelnen Paletten verschieden gestaltet werden kann. Durch eine im Ausgabebereich vorgesehene Ausgabevorrichtung, die jeweils einer bestimmten oder gleichzeitig mehreren Speicher- und Fördereinrichtungen zugeordnet sein kann, werden die Paletten jeder Speicher- und Fördereinrichtung gezielt aus dem Speicherbereich entnommen und zum Abtransport bereitgestellt. Die Ausgabevorrichtung kann dabei zusätzlich eine Abstapeleinheit aufweisen, durch die eine vorgegebene Anzahl von Paletten eines Stapels oder der ganzen Stapel zu Ausgabe vorbereitet oder freigegeben werden kann. Die Abstapeleinheit kann dabei beispielsweise eine bestimmte Anzahl Paletten von einem Stapel so abheben, so dass entweder der abgehobene oder der verbleibende Stapel von Paletten ausgegeben werden kann.
Auf diese Weise kann eine beliebige Anzahl an Paletten, die in Stapeln im Speicherbereich der Speicher- und Fördereinrichtung bereitstehen, ausgegeben werden.

Besonders vorteilhaft ist es, wenn die Ausgabevorrichtung so ausgebildet ist, dass sie Paletten eines Stapels im Ausgabebereich auf Paletten eines anderen Stapels umschichten kann, was beispielsweise mit der Abstapeleinheit geschehen kann. Die umzuschichtenden Paletten können dabei auf einen Stapel innerhalb desselben Speicherbereichs oder, im Falle mehrerer Speicher- und Fördereinrichtungen, auf einen Stapel aus einem anderen Speicherbereich umgeschichtet werden. Insbesondere bietet sich dabei die vorteilhafte Möglichkeit, einen Stapel, der beispielsweise aus weniger als drei Paletten besteht, auf einen dahinter angeordneten Stapel des gleichen Speicherbereichs umzusetzen.

Vorteilhafterweise werden die Palettenstapel im Aufgabebereich aus einer fest vorgegebenen Anzahl von Paletten zu Stapeln zusammengestellt. Dadurch sollen im Speicherbereich vorzugsweise nur Stapel gleicher Höhe angeordnet sein. Eine Festlegung der maximalen Stapelhöhe im Aufgabebereich kann durch eine dort vorgesehene mechanische Blockierung erreicht werden. Wird diese Blockierung so angeordnet, dass sie sich beispielsweise in einer Höhe erstreckt, unter der maximal zwölf Paletten aufgestellt werden können, so verhindert sie, dass mehr als zwölf Paletten durch den Aufgabebereich in den Speicherbereich eingebracht werden können. Selbstverständlich ist jede andere Anzahl als Maximalbegrenzung denkbar.

Besonders vorteilhaft ist es, wenn die Speicher- und Fördereinrichtung und die Ausgabevorrichtung von einer Steuereinheit angesteuert werden. Diese Steuereinheit kann sowohl die Bewegung der Palettenstapel im Speicherbereich über die Ansteuerung geeigneter Motoren als auch die Ausgabevorrichtung im Ausgabebereich ansteuern. Dadurch wird es möglich, eine beliebige Anzahl von Paletten automatisch auszugeben. Sollen beispielsweise 17 Paletten ausgegeben werden, so würde die Steuereinheit die Speicher- und Fördereinrichtung und die Ausgabevorrichtung so ansteuern, dass zunächst ein vollständiger Palettenstapel, der in diesem Fall beispielsweise aus zwölf aufeinander geschichteten Paletten bestünde, ausgegeben, und anschließend noch fünf Paletten von einem weiteren vollständigen Stapel durch die Abstapeleinheit der Ausgabevorrichtung bereitgestellt und sodann ausgegeben würden. Bei einer erneuten Anforderung zur Ausgabe einer Palettenanzahl würden dann die verbleibenden sieben Paletten zunächst ausgegeben, um dann wieder auf einen vollständigen Stapel zugreifen zu können.

Bei der vorteilhaften Anordnung zweier benachbarten Speicher- und Fördereinrichtungen besteht die Möglichkeit, aus einer der beiden Speicher- und Fördereinrichtungen grundsätzlich nur vollständige Stapel auszugeben und aus der anderen Speicher- und Fördereinrichtung Paletten in einer geringeren Anzahl als beispielsweise zwölf. Dadurch, dass in diesem Fall mehrere Speicher- und Fördereinrichtungen gleichzeitig betätigt werden können, ergibt sich der Vorteil einer Zeitersparnis und der einfacheren Ansteuerung.

Über geeignete Sensoren im Aufgabe- und Ausgabebereich einer Speicher- und Fördereinrichtung ist es darüber hinaus vorteilhafterweise möglich, die Höhe eines aufgegebenen oder eines zur Ausgabe bereitstehenden Stapels zu erfassen und an die Steuereinheit zu übermitteln. Dabei kann insbesondere erfasst werden, ob ein aufgegebener Stapel eine gewünschte Mindesthöhe aufweist, oder eine maximale Höhe überschreitet.

Weiterhin können zusätzliche Sensoren im Aufgabebereich angeordnet sein, mit denen kontrolliert werden kann, ob überhaupt ein Stapel im Aufgabebereich bereitsteht und für das Einbringen in den Speicherbereich korrekt ausgerichtet wurde. Auch entlang der Transport- oder Rollenbahnen oder speziell im Bereich der Antriebe für die Bewegung der Paletten, welche insbesondere Einzelplatzantriebe sein können, können Sensoren angeordnet sein, welche das Anstehen eines Stapels erfassen und weitermelden.

Ebenso kann der Steuereinheit die Stapelhöhe des im Ausgabebereich befindlichen Stapels übermittelt werden. Auch die Einsatzbereitschaft für eine Abstapeleinheit kann durch Sensoren überwacht werden. Beispielsweise kann der Fahrweg für die Gabel der Abstapeleinheit, welche vor dem Hub eines Stapels zwischen die Paletten gefahren wird, auf mögliche Blockaden überprüft werden.

Solche und zusätzlich eingesetzte Sensoren und Signale können vorteilhafterweise durch eine Steuereinheit oder eine übergeordnete Steuereinheit abgefragt bzw. verarbeitet werden, um die Bewegungen von Paletten zu steuern oder Fehlermeldungen oder Betriebsparameter auszugeben.

Die Steuereinheit kann vorteilhafterweise mit einer ersten Eingabeeinheit versehen werden, über die die Ausgabeanforderung zur Ausgabe einer bestimmten Anzahl Paletten eingegeben werden kann. Die erste Eingabeeinheit kann dabei als Tastatur, als Barcode-Lesegerät, als Chipkarten-Lesegerät, als Terminal in Form eines Computers oder in anderer geeigneter Form ausgeführt sein. Durch die Eingabe einer Ausgabeanforderung an dieser ersten Eingabeeinheit wird die Steuereinheit angewiesen, die Speicher- und Fördereinrichtung bzw. die Ausgabevorrichtung entsprechend anzusteuern, so dass die Paletten in einem oder mehreren Stapeln nacheinander oder, bei parallel angeordneten Speicher- und Fördereinrichtungen, auch gleichzeitig ausgegeben werden.

Die erste Eingabeeinheit kann sich dabei in räumlicher Nähe der Ausgabevorrichtung befinden, so dass der die Ausgabeanforderung eingebende Bediener die in unmittelbarer Nähe ausgegebenen Paletten entgegennehmen kann. Vorteilhafterweise ist die Speicher- und Fördereinrichtung und die Ausgabevorrichtung in einer solchen Höhe angeordnet, dass die ausgegebenen Paletten auf einfache Weise beispielsweise in einen LKW verladen werden können.

Wird die Steuereinheit mit einer übergeordneten Steuereinheit verbunden, so besteht die vorteilhafte Möglichkeit, Ausgabeanforderungen oder weitere, zur Bearbeitung solcher Anforderungen erforderliche Informationen dezentral über weitere Eingabeeinheiten, welche mit der übergeordneten Steuereinheit verbunden sind, einzugeben. Insbesondere kann beispielsweise über eine zweite Eingabeeinheit, die sich in dem Bereich befindet, an dem Ware mit dem diese transportierenden Paletten entgegengenommen wird, Information über die Anzahl und Beschaffenheit der Paletten oder beispielsweise den Lieferanten eingegeben werden. Die an dieser zweiten Eingabeeinheit eingegebenen Informationen können dann von der übergeordneten Steuereinheit gespeichert oder mit hinterlegten Daten verglichen werden. Ebenfalls ist es möglich, an der übergeordneten Steuereinheit eine Datenausgabeeinheit anzuschließen, durch welche Daten über den Lieferanten, über die Beschaffenheit oder die Anzahl der Paletten ausgegeben werden können. Die Ausgabe kann dabei in Form eines Barcodes oder in für eine Chipkartenbenutzung geeignete Weise erfolgen. Auch jede andere für den Zweck der Datenausgabe geeignete Form ist selbstverständlich möglich. Die an der Datenausgabeeinheit ausgegebenen Daten können vorteilhafterweise an anderer Stelle in eine dritte Eingabeeinheit eingegeben werden. Diese Einheit, die mit der übergeordneten Steuereinheit ebenfalls verbunden ist, kann dann ebenfalls zur Eingabe einer Ausgabeanforderung verwendet werden. Diese dritte Eingabeeinheit kann sich dabei ebenfalls im Bereich der Ausgabevorrichtung der Speicher- und Fördereinrichtung befinden.

Denkbar ist beispielsweise folgender Ablauf für die Ausgabe von Paletten: Bei der Entladung eines LKWs stellt ein Mitarbeiter die Anzahl, die Beschaffenheit und den Lieferanten der Ware bzw. die Spedition fest. Er gibt diese Daten in die zweite Eingabeeinheit ein, die sich im Entladebereich des LKWs befindet. Die übergeordnete Steuereinheit ermittelt aus den ihr zugeführten Daten eine Anzahl auszugebender Paletten, die sie ggf. zusammen mit anderen Informationen über die Datenausgabeeinheit in Form eines Barcodes ausgibt. Dieser Barcode wird dem LKW-Fahrer der Spedition ausgehändigt, und er begibt sich in den Bereich der Ausgabevorrichtung einer Speicher- und Fördereinrichtung für Paletten. Über die dritte Eingabeeinheit, welche sich im Bereich der Ausgabevorrichtung befindet und in diesem Fall als Barcode-Lesegerät ausgeführt ist, kann der LKW-Fahrer die Anforderung zur Ausgabe der Paletten eingeben. Die übergeordnete Steuereinheit steuert dann die Steuereinheit der Speicher- und Fördereinrichtung so an, dass die angeforderte Anzahl von Paletten durch die Ausgabevorrichtung ausgegeben wird.

Handelt es sich dabei beispielsweise um 34 Paletten, so würden zunächst zwei vollständige Stapel mit in diesem Fall jeweils zwölf Paletten ausgegeben werden. Von einem weiteren nachfolgenden vollständigen Stapel würden dann durch Ansteuerung der Ausgabevorrichtung, die hier mit einer Abstapeleinheit versehen sein könnte, zehn weitere Paletten bereitgestellt und ausgegeben. Die Anzahl der im Ausgabebereich zurückgebliebenen Paletten (zwei) würde nun beispielsweise von der Steuereinheit oder der übergeordneten Steuereinheit oder einem Sensor im Ausgabebereich ermittelt werden. Liegt diese Anzahl unter einem vorgegebenen Mindestwert, so könnte die übergeordnete Steuereinheit oder die Steuereinheit der Speicher- und Fördereinrichtung die Ausgabevorrichtung so ansteuern, dass diese die verbliebenen zwei Paletten auf einen anderen Stapel aus vorteilhafterweise dem gleichen Speicherbereich umsetzt.

In einer vorteilhaften Ausführungsform sind zwei Speicher- und Fördereinrichtungen parallel und nebeneinander angeordnet. Dadurch kann die Ausgabevorrichtung einer Speicher- und Fördereinrichtung für die Ausgabe ausschließlich vollständiger Stapel (zu beispielsweise je zwölf Paletten) verwendet werden, wohingegen die andere Speicher- und Fördereinrichtung darüber hinaus anfallende Restmengen an Paletten ausgibt.

In einer weiteren vorteilhaften Ausführungsform steuert die Steuereinheit die Ausgabevorrichtung unabhängig von dem Transport der Stapel in dem Speicherbereich. Dies ermöglicht einen einfachen Aufbau der Speicher- und Fördereinrichtung, bei der der Transport der Stapel im Speicherbereich beispielsweise von Hand erfolgen kann.

In einer weiteren vorteilhaften Ausführungsform wird der Transport der Palettenstapel im Speicherbereich der Speicher- und Fördereinrichtung und die Ausgabevorrichtung gemeinsam von der Steuereinheit gesteuert. Die somit mögliche nahezu vollautomatische Bedienung verringert den personellen Aufwand für die Bewegung der Stapel. Darüber ist der Mensch in die Bedienung der Vorrats- und Ausgabeeinrichtung geringer eingebunden, was unter anderem auch ein mögliches Verletzungsrisiko vermindert.

Eine weitere vorteilhafte Ausführungsform bietet die Möglichkeit, die Anzahl der auszugebenden Transportelemente über eine erste Eingabeeinheit direkt in die Steuereinheit einzugeben, wobei diese die entsprechenden Informationen auch durch eine übergeordnete Steuereinheit erhalten kann. Die vielseitige Anbindung und Einbindung der Förder- und Steuereinrichtung wird dadurch ermöglicht.

Vorteilhafterweise sind Eingabe- und Ausgabeeinheiten der Vorrats- und Ausgabeeinrichtung so ausgebildet, dass sie die Daten aus Barcodes, Chipkarten oder über eine Tastatur bzw. eine LCD- oder LED-Anzeige aufnehmen oder ausgeben können. Auch Computerterminal, an die auch ein Drucker angeschlossen sein kann, sind dafür einsetzbar.

In einer vorteilhaften Ausführungsform ist die Steuereinheit oder die übergeordnete Steuereinheit so ausgebildet, dass sie Angaben über gespeicherte und ausgegebene Transportelemente, deren Anzahl, zuzuordnende Lieferanten oder Spediteure und weitere Informationen speichert und damit jederzeit über ein Abbild der in der Speicher- und Fördereinrichtung vorhandenen oder aus dieser ausgegebenen Stapel und die damit verbundenen Speditionen oder Lieferanten verfügt. Dies ermöglicht eine umfassende, genaue und computergestützte Kontrolle für die Ausgabe der Paletten und kann beispielsweise auch für die Erzeugung eines Nachfüllsignals bei leerem Speicher verwendet werden.

In einer vorteilhaften Ausführungsform ist im Aufgabebereich der Speicher- und Fördereinrichtung eine Kontrolleinrichtung vorgesehen, mit der ein aufgegebener Stapel hinsichtlich einer minimalen oder maximalen Höhe bzw. der Anzahl seiner Paletten erfasst werden kann. Die derart ermittelten Daten können der Steuereinheit oder der übergeordneten Steuereinheit zugeführt werden, so dass diese eine fehlerhafte Beschickung feststellen oder beispielsweise eine neue Standardanzahl von Paletten pro Stapel berücksichtigen kann.

In einer weiteren Ausführungsform der Erfindung ist im Ausgabebereich ein Ausgabesensor vorgesehen, mit dem die Höhe des aktuell bereitstehenden Stapels bzw. die Anzahl seiner Paletten erfasst und an die Steuereinheit oder die übergeordnete Steuereinheit weitergemeldet werden kann. Es kann sich dabei um einen Sensor handeln, der einerseits nur meldet, ob ein bestimmtes Höhen- oder Anzahlmaß über- oder unterschritten wurde, ebenso kann er aber auch so ausgebildet sein, dass er die genaue Palettenanzahl bzw. die genaue Stapelhöhe erfasst und an die Steuereinheiten übermittelt.

Weitere Ausführungsformen der Erfindung ergeben sich aus den Unteransprüchen.

Die Erfindung wird nachfolgend anhand eines in der Zeichnung dargestellten Ausführungsbeispiels erläutert.

Von den Figuren zeigen:
- Fig.1: eine schematische Darstellung einer Vorrats- und Ausgabeeinrichtung mit einer übergeordneten Steuereinheit und Eingabe- bzw. Ausgabeeinheiten; und
- Fig. 2: eine schematische Teilansicht einer Vorrats- und Ausgabeeinrichtung.

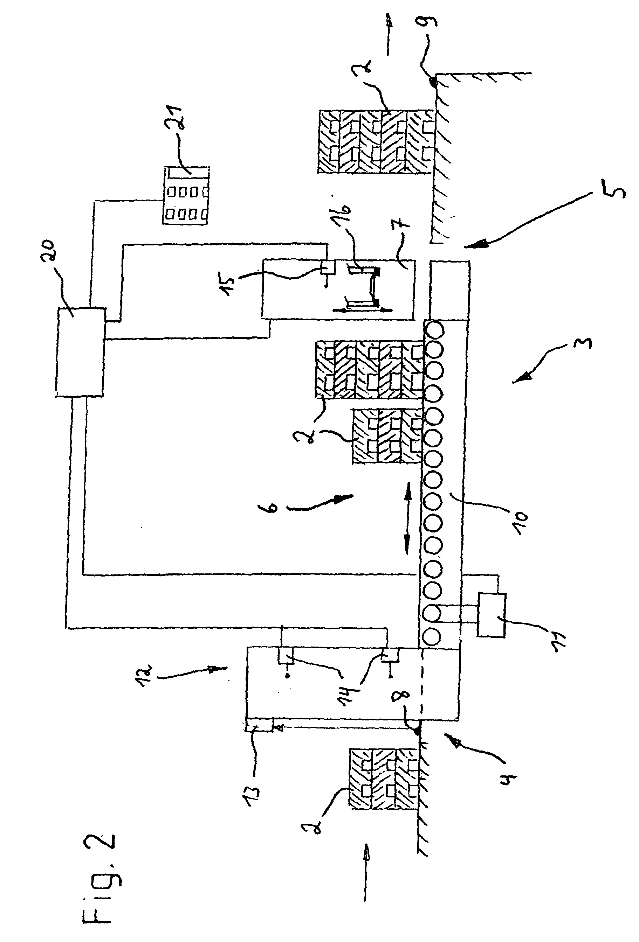

Fig. 2 zeigt eine Speicher- und Fördereinrichtung 3. Die Speicher- und Fördereinrichtung 3 weist an ihrem einen Ende einen Aufgabebereich 4 auf, in welchen Transportelemente 2 aufgegeben werden können. An ihrem dem Aufgabebereich 4 gegenüberliegenden Ende weist die Speicher- und Fördereinrichtung 3 einen Ausgabebereich 5 auf, in welchem die Transportelemente 2 ausgegeben werden. Zwischen dem Aufgabebereich 4 und dem Ausgabebereich 5 erstreckt sich ein Speicherbereich 6. Im Speicherbereich 6 sind zu Stapeln angeordnete Transportelemente 2 so gespeichert, dass sie in Richtung des Aufgabebereichs 4 oder in Richtung des Ausgabebereichs 5 bewegbar sind.

Die Stapel der Transportelemente 2 sind dabei auf einer Rollenbahn 10 angeordnet, welche über einen Antrieb 11 angetrieben wird. Die Rollenbahn 10 kann auch aus einzelnen Abschnitten mit mehreren Antrieben 11 bestehen.

Der Aufgabebereich 4 weist eine Kontrolleinrichtung 12 auf, mit welcher die Höhe eines aufgegebenen Stapels überprüft wird. Eine Blockierung 13 ist dabei so an der Kontrolleinrichtung 12 angeordnet, dass sie sich in im Wesentlichen horizontaler Ausrichtung in einem festgelegten Abstand oberhalb einer Grundfläche 8 befindet. Darüber hinaus weist die Kontrolleinrichtung 12 zwei Aufgabesensoren 14 auf. Die Aufgabesensoren 14 sind so angeordnet, dass sie bei der Aufgabe eines Stapels von Transportelementen 2 die Höhe dieses Stapels dahingehend erfassen, ob ein Mindestmaß unterschritten oder ein Höchstmaß überschritten wurde. Die Aufgabesensoren 14 sind dabei in ihrem Abstand relativ zu der Grundfläche 8 frei verschieblich fixierbar.

Im Ausgabebereich 5 der Speicher- und Fördereinrichtung 3 ist eine Ausgabevorrichtung 7 mit einer Abstapeleinheit 16 angeordnet. Die Ausgabevorrichtung 7 ist so ausgebildet, dass sie eine oder mehrere Paletten 2 eines Stapels von Paletten aus dem Speicherbereich 6 entnehmen den Rest des Stapels einer Entladefläche 9 zuführen kann.

Im Ausgabebereich 5 ist ein Ausgabesensor 15 angeordnet. Der Ausgabesensor 15 ist dabei so angebracht, dass er die Höhe eines im Ausgabebereich 5 bereitstehenden Stapels von Paletten 2 erfasst.

Die Aufgabesensoren 14, der Ausgabesensor 15, der Antrieb 11 und die Ausgabevorrichtung 7 sind mit einer Steuereinheit 20 verbunden. Die Steuereinheit 20 empfängt Signale der Sensoren 14, 15 und steuert den Antrieb 11 und die Ausgabevorrichtung 7 an.

Mit der Steuereinheit 20 ist eine erste Eingabeeinheit 21 verbunden. Die Eingabeeinheit 21 ist hier als Tastatur ausgebildet. Über die Eingabeeinheit 21 kann der Steuereinheit 20 eine Ausgabeanforderung zur Ausgabe einer Anzahl von Paletten 2 übermittelt werden. Nach Eingang einer solchen Ausgabeanforderung über die erste Eingabeeinheit 21 in der Steuereinheit 20 steuert die Steuereinheit 20 den Antrieb 11 zur Bewegung der gestapelten Paletten 2 in Richtung des Ausgabebereichs 5. Weiterhin steuert die Steuereinheit 20 die Ausgabevorrichtung 7 so an, dass die erforderliche Anzahl von Paletten 2 aus dem Speicherbereich 6 entnommen und der Entladefläche 9 zugeführt wird.

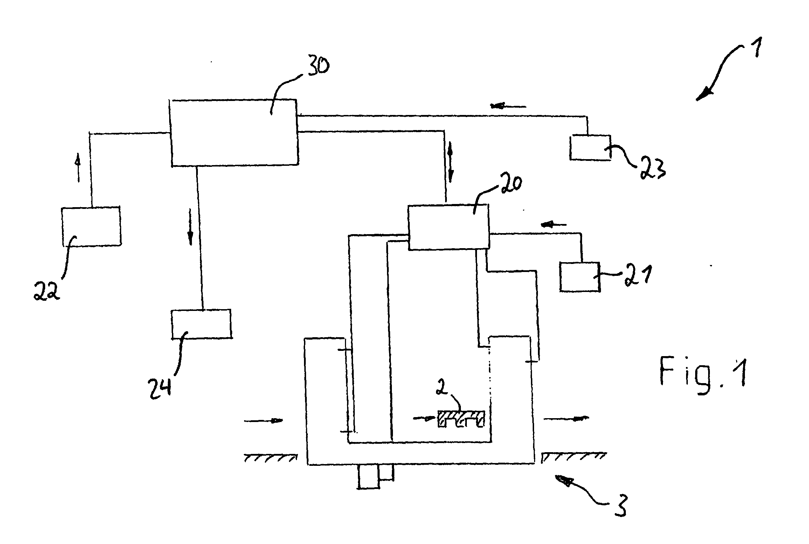

Wie in Fig. 1 zu erkennen ist, ist die Steuereinheit 20 mit einer übergeordneten Steuereinheit 30 verbunden. Die Steuereinheit 30 kann dadurch die Anforderung einer Ausgabe von Paletten und weitere Daten an die Steuereinheit 20 übermitteln. Ebenso kann die Steuereinheit 20 Angaben aus den Sensoren 14, 15 oder über den Antrieb 11 und die Ausgabevorrichtung 7 an die übergeordnete Steuereinheit 30 übermitteln. Weitere, hier nicht dargestellte Sensoren können Signale aus dem Bereich der Speicher- und Fördereinrichtung ebenfalls an die Steuereinheit 20 oder die übergeordnete Steuereinheit 30 übermitteln. Die übergeordnete Steuereinheit 30 kann dabei räumlich getrennt von der Speicher- und Fördereinrichtung 3 und der Steuereinheit 20 angeordnet sein.

Mit der übergeordneten Steuereinheit 30 ist eine zweite Eingabeeinheit 22 verbunden. Die zweite Eingabeeinheit 22 kann dabei als Tastatur, Barcode-Lesegerät oder Chipkarten-Lesegerät ausgebildet sein. Über die zweite Eingabeeinheit 22 können der übergeordneten Steuereinheit 30 Daten in Verbindung mit einer Ausgabeanforderung von Paletten 2 übermittelt werden. Die zweite Eingabeeinheit 22 kann dabei räumlich getrennt von der übergeordneten Steuereinheit 30 angeordnet sein. Insbesondere kann sie im Bereich einer Entladezone, beispielsweise für LKWs oder Güterzüge angeordnet sein.

Mit der übergeordneten Steuereinheit 30 ist eine Datenausgabeeinheit 24 verbunden. Die Datenausgabeeinheit 24 kann dabei zur Ausgabe von Barcodes oder zur Hinterlegung von Daten auf einer Chipkarte ausgebildet sein. Über die Datenausgabeeinheit 24 kann die übergeordnete Steuereinheit 30 Informationen für eine Palettenausgabeanforderung ausgeben. Die Datenausgabeeinheit 24 kann sich dabei in räumlicher Nähe der zweiten Eingabeeinheit 22 befinden. Beispielsweise kann nach Eingabe einer Palettenausgabeanforderung an der zweiten Eingabeeinheit 22 und einer nachfolgenden Datenverarbeitung in der übergeordneten Steuereinheit 30 eine Ausgabeinformation in Form eines Barcodes über die Datenausgabeeinheit 24 ausgegeben werden. Ein solcher Barcode könnte beispielsweise einem LKW-Fahrer ausgehändigt werden, mit dem dieser dann die Möglichkeit hätte, die Ausgabe einer festgelegten Anzahl von Paletten 2 zu bewirken.

Mit der übergeordneten Steuereinheit 30 ist eine dritte Eingabeeinheit 23 verbunden. Die dritte Eingabeeinheit 23 kann in ihrer Ausführung derjenigen der ersten oder zweiten Eingabeeinheit 21 oder 22 entsprechen. Die dritte Eingabeeinheit 23 kann räumlich in der Nähe der Ausgabevorrichtung 7 angeordnet sein. Über die dritte Eingabeeinheit 23 kann der übergeordneten Steuereinheit 30 eine Ausgabeanforderung zur Ausgabe von Paletten 2 eingegeben werden. Eine solche Ausgabeanforderung kann beispielsweise dadurch ausgelöst werden, dass die an der Datenausgabeeinheit 24 ausgegebenen Daten an der dritten Eingabeeinheit 23 eingegeben werden. Beispielsweise könnte der LKW-Fahrer, der die an der Datenausgabeeinheit 24 ausgegebenen Daten an sich genommen hat, mit seinem LKW in den Bereich der Ausgabevorrichtung 7 fahren und dort die Daten der dritten Eingabeeinheit 23 zuführen. Die übergeordnete Steuereinheit 30 kann dann, gegebenenfalls durch einen Datenvergleich, die Ausgabe der ermittelten Anzahl von Paletten 2 auslösen, indem sie entsprechende Signale an die Steuereinheit 20 weiterleitet, und die Steuereinheit 20 die Ausgabevorrichtung 7 und gegebenenfalls den Antrieb 11 zur Ausgabe der Paletten 2 ansteuert.

In die Steuereinheit 20 oder die übergeordnete Steuereinheit 30 können darüber hinaus weitere, hier nicht dargestellte Signale eingebunden werden, welche beispielsweise die Sicherheit, besondere Aus- und Einschaltfunktionen und den zeit- oder bedarfsgesteuerten Betrieb betreffen.

## Patentansprüche

1. Vorrats- und Ausgabeeinrichtung (1) für Transportelemente (2), insbesondere Paletten,
a) mit wenigstens einer Speicher- und Fördereinrichtung (3), in der die Transportelemente (2) in Stapeln transportierbar sind,
b) wobei die Speicher- und Fördereinrichtung (3) an einem ersten Ende einen Aufgabebereich (4) zur Aufgabe der Transportelemente (2) und an einem zweiten Ende einen Ausgabebereich (5) zur Ausgabe der Transportelemente (2) und zwischen dem ersten und zweiten Ende einen Speicherbereich (6) für das Speichern und Fördern der Stapel von Transportelementen (2) zum Ausgabebereich (5) aufweist, und
c) mit einer im Ausgabebereich (5) oder diesem benachbart vorgesehenen Ausgabevorrichtung (7) zur selbsttätigen Ausgabe einer vorgegebenen oder vorgebbaren Anzahl von Transportelementen (2),
**dadurch gekennzeichnet,**
d) dass Antriebsmittel vorgesehen sind, um die Transportelemente (2) zwischen dem Aufgabebereich (4) und dem Ausgabebereich (5) in Stapeln zu bewegen, und
e) dass der Speicherbereich (6) zur Aufnahme mehrerer, hintereinander angeordneter Stapel ausgebildet ist, um die Stapel nacheinander dem Ausgabebereich (5) zuzuführen.

2. Vorrats- und Ausgabeeinrichtung nach Anspruch 1, **dadurch gekennzeichnet, dass** der Speicherbereich (6) wenigstens eine Rollenbahn (10) aufweist, auf der die Transportelemente (2) bewegbar sind, wobei vorzugsweise wenigstens eine Rolle der wenigstens einen Rollenbahn (10) durch einen Antrieb (11) antreibbar ist und dabei die Stapel von Transportelementen (2) zwischen dem Aufgabebereich (4) und dem Ausgabebereich (5) bewegbar sind.

3. Vorrats- und Ausgabeeinrichtung nach einem der vorigen Ansprüche, **dadurch gekennzeichnet, dass** zwei vorzugsweise parallel und nebeneinander angeordnete Speicher- und Fördereinrichtungen (3) vorgesehen sind.

4. Vorrats- und Ausgabeeinrichtung nach einem der vorigen Ansprüche, **dadurch gekennzeichnet, dass** eine Steuereinheit (20) vorgesehen ist, die Ausgabevorrichtung (7) so ansteuert, dass eine Anzahl Transportelemente (2) durch die Ausgabevorrichtung (7) ausgegeben wird.

5. Vorrats- und Ausgabeeinrichtung nach Anspruch 4, **dadurch gekennzeichnet, dass** die Steuereinheit (20) die wenigstens eine Speicher- und Fördereinrichtung (3) so ansteuert, dass sie der Ausgabevorrichtung (7) eine Anzahl Transportelemente (2) für die Ausgabe zuführt.

6. Vorrats- und Ausgabeeinrichtung nach Anspruch 4 oder 5, **dadurch gekennzeichnet, dass** der Steuereinheit (20) die Anzahl der auszugebenden Transportelemente (2) mittels einer ersten Eingabeeinheit (21) oder von einer übergeordneten Steuereinheit (30) zuführbar ist.

7. Vorrats- und Ausgabeeinrichtung nach Anspruch 6, **dadurch gekennzeichnet, dass** der übergeordneten Steuereinheit (30) Informationen betreffend Ausgabeanforderungen mittels einer zweiten Eingabeeinheit (22) zuführbar sind.

8. Vorrats- und Ausgabeeinrichtung nach Anspruch 7, **dadurch gekennzeichnet, dass** die erste Eingabeeinheit (21) und/oder die zweite Eingabeeinheit (22) eine Tastatur und/oder einen Barcodeleser und/oder einen Chipkartenleser umfasst.

9. Vorrats- und Ausgabeeinrichtung nach Anspruch 7 oder 8, **dadurch gekennzeichnet, dass** die Anzahl der auszugebenden Transportelemente (2) unmittelbar in den der übergeordneten Steuerung (30) zugeführten Informationen enthalten ist oder von der übergeordneten Steuerung (30) ermittelt wird.

10. Vorrats- und Ausgabeeinrichtung nach Anspruch 7, **dadurch gekennzeichnet, dass** die Anzahl der auszugebenden Transportelemente (2) aus den an der zweiten Eingabeeinheit (22) eingegeben Informationen und aus den an einer mit der übergeordneten Steuereinheit (30) verbundenen dritten Eingabeeinheit (23) eingegeben Informationen ermittelt wird.

11. Vorrats- und Ausgabeeinrichtung nach Anspruch 10, **dadurch gekennzeichnet, dass** die dritte Eingabeeinheit (23) eine Tastatur und/oder einen Barcodeleser und/oder einen Chipkartenleser umfasst.

12. Vorrats- und Ausgabeeinrichtung nach einem der Ansprüche 6 bis 11, **dadurch gekennzeichnet, dass** die übergeordnete Steuerung (30) Informationen an eine Datenausgabeeinheit (24) gibt, wobei die Daten an der Datenausgabeeinheit (24) vorzugsweise als Barcode und/oder zur Speicherung auf einer Chipkarte ausgebbar sind.

13. Vorrats- und Ausgabeeinrichtung nach einem der Ansprüche 4 bis 12, **dadurch gekennzeichnet, dass** die Steuereinheit (20) die wenigstens eine Speicher- und Fördereinrichtung (3) so ansteuert, dass die Ausgabevorrichtung (7) verbleibende Transportelemente (2) eines Reststapels auf einen anderen Stapel umschichtet, wenn die Anzahl der Transportelemente (2) des Reststapels kleiner oder gleich einem vorgegebenen Wert ist.

14. Vorrats- und Ausgabeeinrichtung nach einem der Ansprüche 4 bis 13, **dadurch gekennzeichnet, dass** zwei Speicher- und Fördereinrichtungen (3) vorgesehen sind, und die Steuereinheit (20) die Ausgabevorrichtungen (7) so ansteuert, dass die eine Ausgabevorrichtung (7) nur Stapel mit einer festlegbaren Anzahl von Transportelementen (2) ausgibt.

15. Vorrats- und Ausgabeeinrichtung nach einem der Ansprüche 4 bis 14, **dadurch gekennzeichnet, dass** die Steuereinheit (20) und/oder die übergeordnete Steuereinheit (30) die Anzahl zugeführter, gespeicherter und ausgegebener Transportelemente (2) und die Anzahl der Transportelemente (2) in jedem Stapel speichert und damit jederzeit über ein Abbild der in der Speicher- und Fördereinrichtung (3) vorhandenen und aus dieser ausgegebenen Stapel von Transportelementen (2) verfügt.

16. Vorrats- und Ausgabeeinrichtung nach einem der vorigen Ansprüche, **dadurch gekennzeichnet, dass** der Aufgabebereich (4) eine Kontrolleinrichtung (12) aufweist, mit der eine Standardanzahl der aufzugebenden Transportelemente (2) festlegbar ist.

17. Vorrats- und Ausgabeeinrichtung nach Anspruch 16, **dadurch gekennzeichnet, dass** die Kontrolleinrichtung (12) die aufgebbare Standardanzahl an Transportelementen (2) durch eine mechanische Blockierung (13) begrenzt.

18. Vorrats- und Ausgabeeinrichtung nach einem Ansprüche 4 bis 17, **dadurch gekennzeichnet, dass** die Kontrolleinrichtung (12) wenigstens einen Aufgabesensor (14) aufweist, der eine vorgebbare Höhe eines Stapels von aufgegebenen Transportelementen (2) oder deren Anzahl erfasst und der Steuereinheit (20) oder der übergeordneten Steuereinheit (30) meldet.

19. Vorrats- und Ausgabeeinrichtung nach einem der Ansprüche 4 bis 18, **dadurch gekennzeichnet, dass** ein Ausgabesensor (15) im Ausgabebereich (5) die Höhe eines Stapels von Transportelementen (2) oder deren Anzahl erfasst und der Steuereinheit (20) oder der übergeordneten Steuereinheit (30) meldet.

20. Vorrats- und Ausgabeeinrichtung nach einem der Ansprüche 4 bis 19, **dadurch gekennzeichnet, dass** weitere Sensoren vorgesehen sind, mit denen die Bereitstehung eines Stapels im Aufgabebereich (4) und/oder dessen Ausrichtung und/ oder die Bereitstehung einzelner Stapel im Speicherbereich (6) und/oder im Ausgabebereich (5) und/oder die Einsatzfähigkeit der Ausgabevorrichtung (7) und/oder Haltsignale und/oder Startsignale erfasst werden können.

21. Vorrats- und Ausgabeeinrichtung nach einem der vorigen Ansprüche, **dadurch gekennzeichnet, dass** im Bereich der Ausgabevorrichtung (7) eine Abstapeleinheit (16) vorgesehen ist.

22. Verfahren zur Ausgabe von Transportelementen mit einer Vorrats- und Ausgabeeinrichtung nach einem der vorigen Ansprüche, wobei
a) in einem ersten Schritt eine Anzahl Transportelemente vorzugsweise in einem Stapel im Aufgabebereich (4) aufgegeben wird, und
b) wobei in einem zweiten Schritt der aufgegebene Stapel in den Speicherbereich (6) gefördert und dort gespeichert wird, und
c) wobei in einem dritten Schritt auf Anforderung eine Anzahl Transportelemente mit der Ausgabevorrichtung (7) im Ausgabebereich (5) aus dem Speicherbereich (6) ausgegeben wird.

23. Verfahren nach Anspruch 22, **dadurch gekennzeichnet, dass** nach dem zweiten Schritt im Speicherbereich (6) ein Umsetzen von wenigstens einem Transportelement von einem Stapel auf einen anderen Stapel erfolgt und/oder das zur Ausgabe eines unteren Teils eines Stapels im dritten Schritt ein oberer Teil dieses Stapels abgehoben und dabei nicht ausgegeben wird.

## Claims

1. Storage and dispensing device (1) for transport elements (2), in particular pallets,
a) having at least one storing and conveying device (3) in which the transport elements (2) can be transported in stacks,
b) wherein the storing and conveying device (3) has at a first end a loading area (4) for loading the transport elements (2) and at a second end has a dispensing area (5) for dispensing the transport elements (2) and between the first and second end has a storing area (6) for storing and conveying the stacks of transport elements (2) to the dispensing area (5), and
c) having a dispensing arrangement (7) that is provided in the dispensing area (5) or is adjacent thereto for automatically dispensing a predetermined or predeterminable number of transport elements (2),
**characterised**
d) in that drive means are provided in order to move the transport elements (2) in stacks between the loading area (4) and the dispensing area (5), and
e) in that the storing area (6) is formed so that it can receive a plurality of stacks arranged one after the other in order to feed the stacks in succession to the dispensing area (5).

2. Storage and dispensing device according to claim 1, **characterised in that** the storing area (6) has at least one roller conveyor (10) on which the transport elements (2) can be moved, in which case preferably at least one roller of the at least one roller conveyor (10) can be driven by means of a drive (11) and the stacks of transport elements (2) can thereby be moved between the loading area (4) and the dispensing area (5).

3. Storage and dispensing device according to one of the previous claims, **characterised in that** two storing and conveying devices (3) are provided that are preferably arranged in parallel and side by side.

4. Storage and dispensing device according to one of the previous claims, **characterised in that** a control unit (20) is provided that activates the dispensing arrangement (7) in such a way that a number of transport elements (2) are dispensed by the dispensing arrangement (7).

5. Storage and dispensing device according to claim 4, **characterised in that** the control unit (20) activates the at least one storing and conveying device (3) in such a way that it feeds a number of transport elements (2) to the dispensing arrangement (7) in order for them to be dispensed.

6. Storage and dispensing device according to claim 4 or 5, **characterised in that** the number of transport elements (2) to be dispensed can be fed to the control unit (20) by means of a first input unit (21) or from a higher-level control unit (30).

7. Storage and dispensing device according to claim 6, **characterised in that** information relating to dispensing requirements can be fed to the higher-level control unit (30) by means of a second input unit (22).

8. Storage and dispensing device according to claim 7, **characterised in that** the first input unit (21) and/or the second input unit (22) comprise/comprises a keyboard and/or a bar-code reader and/or a chip-card reader.

9. Storage and dispensing device according to claim 7 or 8, **characterised in that** the number of transport elements (2) to be dispensed is contained directly in the information fed to the higher-level control (30) or is determined by the higher-level control (30).

10. Storage and dispensing device according to claim 7, **characterised in that** the number of transport elements (2) to be dispensed is determined from the information input at the second input unit (22) and from the information input at a third input unit (23) connected to the higher-level control unit (30).

11. Storage and dispensing device according to claim 10, **characterised in that** the third input unit (23) comprises a keyboard and/or a bar-code reader and/or a chip-card reader.

12. Storage and dispensing device according to one of claims 6 to 11, **characterised in that** the higher-level control (30) gives information to a data-output unit (24), in which case the data can be output at the data-output unit (24) preferably as a bar code and/or for storage on a chip card.

13. Storage and dispensing device according to one of claims 4 to 12, **characterised in that** the control unit (20) activates the at least one storing and conveying device (3) in such a way that the dispensing arrangement (7) restacks remaining transport elements (2) of a residual stack onto another stack if the number of transport elements (2) of the residual stack is smaller than or equal to a predetermined value.

14. Storage and dispensing device according to one of claims 4 to 13, **characterised in that** two storing and conveying devices (3) are provided, and the control unit (20) activates the dispensing arrangements (7) in such a way that the one dispensing arrangement (7) only dispenses stacks with a definable number of transport elements (2).

15. Storage and dispensing device according to one of claims 4 to 14, **characterised in that** the control unit (20) and/or the higher-level control unit (30) store/stores the number of transport elements (2) that have been fed, stored and dispensed and the number of transport elements (2) in each stack and thus at any time are/is provided with a picture of the stacks of transport elements (2) present in the storing and conveying device (3) and of the stacks of transport elements (2) dispensed from the latter.

16. Storage and dispensing device according to one of the previous claims, **characterised in that** the loading area (4) has a checking device (12) with which a standard number of transport elements (2) that are to be loaded can be defined.

17. Storage and dispensing device according to claim 16, **characterised in that** the checking device (12) limits the standard number of transport elements (2) that can be loaded by means of a mechanical block (13).

18. Storage and dispensing device according to one of claims 4 to 17, **characterised in that** the checking device (12) has at least one loading sensor (14) that detects a predeterminable height of a stack of transport elements (2) that have been loaded or the number of them and informs the control unit (20) or the higher-level control unit (30).

19. Storage and dispensing device according to one of claims 4 to 18, **characterised in that** a dispensing sensor (15) in the dispensing area (5) detects the height of a stack of transport elements (2) or the number of them and informs the control unit (20) or the higher-level control unit (30).

20. Storage and dispensing device according to one of claims 4 to 19, **characterised in that** further sensors are provided with which the readiness of a stack in the loading area (4) and/or its alignment and/or the readiness of individual stacks in the storing area (6) and/or in the dispensing area (5) and/or the operational capability of the dispensing arrangement (7) and/or stop signals and/or start signals can be detected.

21. Storage and dispensing device according to one of the previous claims, **characterised in that** an unstacking unit (16) is provided in the area of the dispensing arrangement (7).

22. Method for dispensing transport elements with a storage and dispensing device according to one of the previous claims,
a) wherein in a first step a number of transport elements are loaded preferably in a stack in the loading area (4), and
b) wherein in a second step the loaded stack is conveyed into the storing area (6) and stored there, and
c) wherein in a third step upon demand a number of transport elements are dispensed out of the storing area (6) by the dispensing arrangement (7) in the dispensing area (5).

23. Method according to claim 22, **characterised in that** after the second step in the storing area (6) a transfer of at least one transport element from one stack to another stack takes place, and/or **in that** in order to dispense a lower portion of a stack in the third step an upper portion of this stack is lifted and is not then dispensed.

## Revendications

1. Dispositif de stockage et de délivrance (1) pour des éléments de transport (2), notamment des palettes,
a) comportant au moins un dispositif d'accumulation et d'acheminement (3), dans lequel les éléments de transport (2) peuvent être transportés sous la forme de piles,
b) le dispositif d'accumulation et d'acheminement (3) comportant à une première extrémité une zone de chargement (4) pour le chargement des éléments de transport (2) et, à une seconde extrémité, une zone de délivrance (5) pour la délivrance des éléments de transport (2), et entre les première et seconde extrémités, une zone d'accumulation (6) pour l'accumulation et l'acheminement des piles d'éléments de transport (2) en direction de la zone de délivrance (5), et
c) le dispositif de délivrance (7) prévu dans la zone de délivrance (5) ou au voisinage de cette dernière pour la délivrance automatique d'un nombre prédéterminé ou prédéterminable d'éléments de transport (2),
**caractérisé en ce**
d) que des moyens d'entraînement sont prévus pour déplacer les éléments de transport (2) entre la zone de chargement (4) et la zone de délivrance (5) sous la forme de piles, et
e) que la zone d'accumulation (6) est agencée pour la réception de plusieurs piles disposées les unes derrière les autres, de manière à amener les piles successivement à la zone de délivrance (5).

2. Dispositif de stockage et de délivrance selon la revendication 1, **caractérisé en ce que** la zone d'accumulation (6) comporte au moins une table à rouleaux (10), sur laquelle les éléments de transport (2) sont déplaçables, de préférence au moins un rouleau de la au moins une table à rouleaux (10) pouvant être entraîné par un dispositif d'entraînement (11), et les piles d'éléments de transport (2) étant déplaçables entre la zone de chargement (4) et la zone de délivrance (5).

3. Dispositif de stockage et de délivrance selon l'une des revendications précédentes, **caractérisé en ce qu'**il est prévu deux dispositifs d'accumulation et d'acheminement (3) disposés de préférence de manière à être parallèles et côte-à-côte.

4. Dispositif de stockage et de délivrance selon l'une des revendications précédentes, **caractérisé en ce qu'**il est prévu une unité de commande (20) qui commande le dispositif de délivrance (7) de telle sorte qu'un nombre d'éléments de transport (2) est délivré par le dispositif de délivrance (7).

5. Dispositif de stockage et de délivrance selon la revendication 4, **caractérisé en ce que** l'unité de commande (20) commande le au moins un dispositif d'accumulation et d'acheminement (3) de telle sorte que le dispositif de délivrance (7) envoie un nombre d'éléments de transport (2) pour la délivrance.

6. Dispositif de stockage et de délivrance selon la revendication 4 ou 5, **caractérisé en ce que** le nombre des éléments de transport (2) à délivrer peut être envoyé à l'unité de commande (20) au moyen d'une première unité (21) ou d'une unité de commande (30) de rang supérieur.

7. Dispositif de stockage et de délivrance selon la revendication 6, **caractérisé en ce que** les informations concernant des demandes de délivrance peuvent être envoyées à l'unité de commande de rang supérieur (30) au moyen d'une seconde unité d'entrée (22).

8. Dispositif de stockage et de délivrance selon la revendication 1, **caractérisé en ce que** la première unité d'entrée (21) et/ou la seconde unité d'entrée (22) comprennent un clavier et/ou un lecteur de codes à barres et/ou un lecteur de carte à puce.

9. Dispositif de stockage et de délivrance selon la revendication 7 ou 8, **caractérisé en ce que** le nombre des éléments de transport (2) devant être délivrés est déterminée directement dans les informations envoyées à l'unité de commande de rang supérieur (30) ou est déterminé par l'unité de commande de rang supérieur (30).

10. Dispositif de stockage et de délivrance selon la revendication 7, **caractérisé en ce que** le nombre des éléments de transport (2) devant être délivrés est formé par les informations introduites au niveau de la seconde unité d'entrée (22) et est déterminé à partir des informations introduites dans une troisième unité d'entrée (23) reliée à l'unité de commande de rang supérieur (30).

11. Dispositif de stockage et de délivrance selon la revendication 10, **caractérisé en ce que** la troisième unité d'entrée (23) comporte un clavier et/ou un lecteur de codes à barres et/ou un lecteur de carte à puce.

12. Dispositif de stockage et de délivrance selon l'une des revendications 6 à 11, **caractérisé en ce que** l'unité de commande de rang supérieur (30) délivre des informations à une unité de sortie de données (24),les données de l'unité de sortie de données (24) pouvant être délivrées de préférence sous la forme d'un code à barres et/ou pour être mémorisées sur une carte à puce.

13. Dispositif de stockage et de délivrance selon l'une des revendications 4 à 12, **caractérisé en ce que** l'unité de commande (20) commande le au moins un dispositif d'accumulation et d'acheminement (3) de telle sorte que le dispositif de délivrance (7) réarrange des éléments de transport récents (2) d'une pile résiduelle sur une autre pile lorsque le nombre des éléments de transport (2) de la pile restante est inférieur ou égal à une valeur prédéterminée.

14. Dispositif de stockage et de délivrance selon l'une des revendications 4 à 13, **caractérisé en ce qu'**il est prévu deux dispositifs d'accumulation et d'acheminement (3) et que l'unité de commande (20) commande les dispositifs de délivrance (7) de telle sorte qu'un dispositif de délivrance (7) délivre uniquement des piles possédant un nombre pouvant être fixé d'éléments de transport (2).

15. Dispositif de stockage et de délivrance selon l'une des revendications 4 à 14, **caractérisé en ce que** le dispositif de commande (20) et/ou l'unité de commande de rang supérieur (30) mémorisent le nombre d'éléments de transport (2) amenés, stockés et délivrés et le nombre des éléments de transport (2) dans chaque pile et par conséquent dispose, à tout moment, d'une image des piles d'éléments de transport (2) présents dans le dispositif d'accumulation et d'acheminement (3) et délivrés à partir de ce dispositif.

16. Dispositif de stockage et de délivrance selon l'une des revendications précédentes, **caractérisé en ce que** la zone de chargement (4) comporte un dispositif de contrôle (12), à l'aide duquel un nombre standard des éléments de transport (2) devant être délivré peut être fixé.

17. Dispositif de stockage et de délivrance selon la revendication 16, **caractérisé en ce que** le dispositif de contrôle (12) limite le nombre standard pouvant être délivré, d'éléments de transport (2) au moyen d'un système de blocage mécanique (13).

18. Dispositif de stockage et de délivrance selon l'une des revendications 4 à 17, **caractérisé en ce que** le dispositif de contrôle (12) comporte au moins un capteur de délivrance (14), qui détecte une hauteur pouvant être prédéterminée d'une pile d'éléments de transport (2) délivrés ou son nombre, et le signal à l'unité de commande (20) ou à l'unité de commande de rang supérieur (30).

19. Dispositif de stockage et de délivrance selon l'une des revendications 4 à 18, **caractérisé en ce qu'**un capteur de délivrance (15) détecte, dans la zone de délivrance (5) une hauteur de la pile d'éléments de transport (2) ou le nombre d'éléments de transport, et le signale à l'unité de commande (20) ou à une unité de commande de rang supérieur (30).

20. Dispositif de stockage et délivrance selon l'une des revendications 4 à 19, **caractérisé en ce que** d'autres capteurs sont prévus, à l'aide desquels il est possible de détecter l'état prêt d'une pile dans la zone de chargement (4) et/ou son orientation et/ou la disposition de piles individuels dans la zone de mémoire (6) et/ou dans la zone de délivrance (5) et/ou la capacité d'utilisation du dispositif de sortie (7) et/ou des signaux de retenue et/ou des signaux de départ.

21. Dispositif de stockage et de délivrance selon l'une des revendications précédentes, **caractérisé en ce qu'**une unité de désempilage (16) est prévue dans la zone du dispositif de délivrance (7).

22. Procédé pour la délivrance d'éléments de transport comportant un dispositif de réserve et de délivrance selon l'une des revendications précédentes, selon lequel
a) lors d'une première étape, un nombre d'éléments de transport est délivré de préférence dans une pile dans la zone de chargement (4), et
b) lors d'une seconde étape, la pile délivrée est entraînée dans la zone de stockage (6) et y est stockée, et
c) dans lequel lors d'une troisième étape, sur demande, un nombre d'éléments de transport avec le dispositif de délivrance (7) dans la zone de délivrance (5) est délivré à partir de la zone de stockage (6).

23. Procédé selon la revendication 22, **caractérisé en ce qu'**après la seconde étape dans la zone de stockage (6), il se produit une conversion d'au moins un élément de transport d'une pile à une autre pile et/ou que la délivrance d'une partie inférieure d'une pile dans la troisième étape, une seconde partie de cette pile est soulevée et n'est pas délivrée.
